# EUROPÄISCHE PATENTANMELDUNG

(11) **EP 4 085 801 A1**
(43) Veröffentlichungstag der Anmeldung: **09.11.2022**
(21) Anmeldenummer: 21172377.0
(22) Anmeldetag: 06.05.2021
(51) Int. Cl.: A47J 31/44

(54) **GETRÄNKEZUBEREITUNGSMASCHINE MIT ABSTELLELEMENT ZUR POSITIONIERUNG UNTERSCHIEDLICHER GEFÄSSE ZUR GETRÄNKEAUFNAHME**

(71) Anmelder: Tchibo GmbH, 22297 Hamburg (DE)
(72) Erfinder: ERDWIENS, ALEXANDER, 64283 Darmstadt (DE); DANIELS, MICHA, 65843 Sulzbach (DE)
(74) Vertreter: Frei Patent Attorneys

(57) **Zusammenfassung**

Die Erfindung betrifft eine Getränkezubereitungsmaschine 1 mit einem Abstellelement 21 zur Positionierung unterschiedlicher Gefässe in der Getränkezubereitungsmaschine 1 zur Aufnahme des zubereiteten Getränkes, das heisst während eines Zubereitungsprozesses, sowie das Abstellelement 21 selbst.

Das Abstellelement 21 kann relativ zu einem Auslauf 14 der Getränkezubereitungsmaschine 1 in einer ersten Ausrichtung und einer von der ersten Ausrichtung verschiedenen zweiten Ausrichtung angeordnet werden. Sowohl in der ersten Ausrichtung als auch in der zweiten Ausrichtung ist ein Gefäss zur Aufnahme des zubereiteten Getränkes während der Getränkezubereitung auf dem Abstellelement 21 abstellbar.

## Beschreibung

Die Erfindung betrifft eine Getränkezubereitungsmaschine mit einem Abstellelement zur Positionierung unterschiedlicher Gefässe in der Getränkezubereitungsmaschine zur Aufnahme des zubereiteten Getränkes, das heisst während eines Zubereitungsprozesses, sowie das Abstellelement selbst. Bei der Getränkezubereitungsmaschine handelt es sich insbesondere um eine Getränkezubereitungsmaschine zum Zubereiten eines Getränks aus einer Portionskapsel, insbesondere eine Kaffeekapselmaschine.

Die Anforderungen an Getränkezubereitungsmaschinen erhöhen sich laufend. Dies rührt unter anderem daher, dass es ein Wunsch der Benutzer ist, Getränke zubereiten zu können, die beispielsweise bezüglich Getränkemenge, Geschmack (insbesondere Stärke), Zubereitung und/oder Anteil an verschiedenen Bestandteilen (beispielsweise Kaffee und Milch) individualisiert sind. Gleichzeitig soll die Bedienung und der Unterhalt der Getränkezubereitungsmaschine so einfach und intuitive wie möglich bleiben, der Platzbedarf der Getränkezubereitungsmaschine möglichst klein bleiben und der optische Eindruck hochwertig sein.

In anderen Worten stellt sich bei modernen Getränkezubereitungsmaschinen, insbesondere bei modernen Getränkezubereitungsmaschinen für den nicht kommerziellen Gebrauch, unter anderem die Aufgabe, die Getränke- und Zubereitungsvielfalt zu erhöhen, ohne dabei die Bedienung, den Unterhalt und den Platzbedarf zu erhöhen oder den optischen Eindruck zu verschlechtern.

Mit dieser Aufgabe eng verbunden ist die Frage, wie die Verwendung von unterschiedlichen Gefässen zur Aufnahme eines durch die Getränkezubereitungsmaschine zubereiteten Getränks, ermöglicht werden kann, wobei sich die Gefässe insbesondere in ihrer Grösse, insbesondere ihrer Höhe, unterscheiden.

Der Stand der Technik bietet hierzu in erster Linie zwei Lösungen an. Gemäss einer ersten Lösung, weist die Getränkezubereitungsmaschine ein Tassenpodest auf, das aus einem Grundkörper (Gehäuse, Grundeinheit) der Getränkezubereitungsmaschine herausgezogen werden kann. Eine entsprechende Getränkezubereitungsmaschine ist beispielsweise in WO 2017/067788 A1 offenbart.

Gemäss einer zweiten Lösung, weist die Getränkezubereitungsmaschine eine Art ausklappbarer Tisch auf, der an einer Wand des Grundkörpers der Getränkezubereitungsmaschine angeordnet ist.

Diese Lösungen für Abstellelemente für unterschiedliche Gefässe sind unbefriedigend, weil sie beispielsweise Scharniere und/oder Führungen aufweisen und somit komplex und deshalb teuer in der Herstellung sowie fehler- und beschädigungsanfällig im Gebrauch sind. Ferner sind diese Lösungen auch bezüglich Unterhalt unbefriedigend, weil sie den Reinigungsaufwand erhöhen. Dieser hängt wesentlich mit der Anzahl zu reinigen Teilen des Abstellelements und deren Zugänglichkeit sowie möglichen Verunreinigungen und deren Zugänglichkeit am oder im Grundkörper der Getränkezubereitungsmaschine zusammen. Letztlich erhöht zumindest die genannte erste Lösung gemäss dem Stand der Technik (aus dem Grundkörper herausziehbares Tassenpodest) den Platzbedarf der Getränkezubereitungsmaschine, weil das Tassenpodest in der Regel voluminös ist.

Es ist eine Aufgabe der Erfindung, eine Getränkezubereitungsmaschine zur Verfügung zu stellen, die ein Abstellelement umfasst, mit dem unterschiedliche Gefässe zur Aufnahme des zubereiteten Getränks möglichst optimal während des Zubereitungsprozesses positionierbar sind und das Nachteile von Getränkezubereitungsmaschinen mit Abstellelementen gemäss dem Stand der Technik, beispielsweise der oben genannten herausziehbaren Tassenpodeste oder ausklappbaren Tische, überwindet. Dabei unterscheiden sich die unterschiedlichen Gefässe insbesondere in ihrer Grösse, insbesondere in ihrer Höhe, voneinander. Welches der unterschiedlichen Gefässe während des Zubereitungsprozesses durch Verwendung des Abstellelements zur Getränkezubereitungsmaschine möglichst optimal positioniert wird, hängt von einer Wahl des Benutzers ab. Die Wahl kann beispielsweise vom zubereiteten Getränk abhängen, das heisst das Gefäss ist auf das zubereitete Getränk abgestimmt, oder das Resultat anderer Beweggründe sein, beispielsweise eine Vorliebe für ein bestimmtes Gefäss.

Es ist insbesondere eine Aufgabe der Erfindung, eine Getränkezubereitungsmaschine zur Verfügung zu stellen, die ein Abstellelement umfasst, mit dem unterschiedliche Gefässe zur Aufnahme des zubereiteten Getränks möglichst optimal während des Zubereitungsprozesses positionierbar sind und das bezüglich Herstellungsaufwand, Zuverlässigkeit, insbesondere Fehler- und Beschädigungsanfälligkeit, und/oder Unterhalt, insbesondere Reinigungsaufwand, gegenüber den Abstellelementen gemäss dem Stand der Technik verbessert ist.

Es ist ferner eine Aufgabe der Erfindung, das Abstellelement selbst zur Verfügung zu stellen.

Eine erfindungsgemässe Getränkemaschine, die ein erfindungsgemässes Abstellelement aufweist, weist ferner einen Auslauf zur Abgabe eines zubereiteten Getränkes und einen Aufnahmebereich zur Aufnahme eines Gefässes zur Aufnahme des zubereiteten Getränkes auf.

Der Auslauf ist in der Regel an einer Auslaufhaube, beispielsweise an dessen Unterseite, angeordnet.

Der Aufnahmebereich ist gegen oben hin durch den Auslauf und/oder die Auslaufhaube begrenzt.

Die Getränkezubereitungsmaschine, insbesondere das Abstellelement und ein Bereich der Getränkezubereitungsmaschine, der den Aufnahmebereich umfasst, ist derart ausgebildet, dass das Abstellelement relativ zum Auslauf in einer ersten Ausrichtung und in einer zweiten Ausrichtung angeordnet werden kann, wobei die zweite Ausrichtung von der ersten Ausrichtung verschieden ist.

Die Getränkezubereitungsmaschine, insbesondere das Ab stell element und ein Bereich der Getränkezubereitungsmaschine, der den Aufnahmebereich umfasst, ist derart ausgebildet, dass sowohl in der ersten Ausrichtung des Abstellelements als auch in der zweiten Ausrichtung des Abstellelements ein Gefäss zur Aufnahme des zubereiteten Getränkes während der Getränkezubereitung auf dem Abstellelement abstellbar ist. Dabei ist die Position eines ersten Gefässes oder einer ersten Gefässgruppe innerhalb der Getränkezubereitungsmaschine, insbesondere relativ zum Auslauf, optimiert, wenn sich das Abstellelement in der ersten Ausrichtung befindet, und die Position eines zweiten Gefässes oder einer zweiten Gefässgruppe ist innerhalb der Getränkezubereitungsmaschine, insbesondere relativ zum Auslauf, optimiert, wenn sich das Abstellelement in der zweiten Ausrichtung befindet. Das erste Gefäss oder die erste Gefässgruppe unterscheidet sich insbesondere in einer Gefässhöhe vom zweiten Gefäss oder von der zweiten Gefässgruppe.

Mit Blick auf das Abstellelement ist also sowohl dessen Beschaffenheit als auch dessen Anordnung in der Getränkezubereitungsmaschine sowohl in der ersten Ausrichtung als auch in der zweiten Ausrichtung derart, dass ein Gefäss zur Aufnahme des durch die Getränkezubereitungsmaschine zubereiteten Getränks während der Getränkezubereitung auf dem Abstellelement abstellbar ist. Dabei optimiert das Abstellelement in erster Ausrichtung die Position eines ersten Gefässes und das Abstellelement in zweiter Ausrichtung die Position eines zweiten Gefässes, wobei sich das erste und zweite Gefäss insbesondere in der Gefässhöhe unterscheiden.

Die Beschaffenheit des Abstellelements betrifft beispielsweise das Vorhandensein einer horizontal angeordneten Fläche sowohl in der ersten als auch in der zweiten Ausrichtung des Abstellelements, auf der ein Gefäss zur Aufnahme des zubereiteten Getränkes während der Getränkezubereitung abgestellt werden kann.

In einer bevorzugten Ausführungsform ist die horizontale Fläche bei erster Ausrichtung des Abstellelements und die horizontale Fläche bei zweiter Ausrichtung des Ab stell elements eine Fläche oder Flächen desselben Bereichs des Abstellelements. Das bedeutet, dass es gemäss einer ersten Variante dieser Ausführungsform dieselbe Fläche des Abstellelements ist, auf dem ein Gefäss bei erster und zweiter Ausrichtung abstellbar ist, und dass der besagte Bereich gemäss einer zweiten Variante dieser Ausführungsform zwei Flächen aufweisen kann, auf denen bei entsprechender Ausrichtung des Abstellelements ein Gefäss abstellbar ist.

Insbesondere die zweite Variante ist mit Blick auf die durch die Erfindung zu lösenden Aufgaben interessant. Beispielsweise kann der Bereich plattenartig gebildet sein, wobei eine erste Flachseite des plattenartigen Bereichs die Fläche bildet, auf der ein Gefäss bei erster Ausrichtung des Abstellelements abstellbar ist und wobei die der ersten Flachseite gegenüberliegende Flachseite die Fläche bildet auf der ein Gefäss bei zweiter Ausrichtung des Abstellelements abstellbar ist.

Unabhängig davon, ob die horizontal angeordnete Fläche bei erster Ausrichtung und die horizontal angeordnete Fläche bei zweiter Ausrichtung gemäss erster oder zweiter Variante realisiert sind, kann der Bereich des Abstellelements ein erster Bereich des Abstellelements sein und das Abstellelement einen zweiten Bereich aufweisen. Dabei ist der erste Bereich sowohl in der ersten als auch in der zweiten Ausrichtung horizontal angeordnet, wobei ein Gefäss zur Aufnahme des zubereiteten Getränkes während der Getränkezubereitung sowohl in der ersten als auch in der zweiten Ausrichtung auf dem ersten Bereich abstellbar ist.

Ferner verläuft bei dieser Ausführungsform der zweite Bereich sowohl in der ersten als auch in der zweiten Ausrichtung des Abstellelements unter einem Winkel zum ersten Bereich.

In einer Ausführungsform ist der Winkel ein nicht veränderbarer Winkel. Das heisst, der zweite Bereich verläuft sowohl in der ersten Ausrichtung als auch in der zweiten Ausrichtung unter demselben Winkel relativ zum ersten Bereich. Dieser Winkel kann insbesondere 90° sein.

Unabhängig davon, ob eines oder mehrere der zuvor und nachfolgend genannten Merkmale von Ausführungsformen des Abstellelements realisiert sind, kann das Abstellelement in einer Ausführungsform als ein L-förmiges Element realisiert sein. Dies schliesst Ausführungsformen mit ein, bei denen nur ein für die Form und Funktion des Abstellelements prägender Teil L-förmig ist. Ein Teil des Abstellelements ist insbesondere dann für die Form und Funktion prägend, wenn ein Gefäss zur Aufnahme des zubereiteten Getränkes während der Getränkezubereitung auf einem Bereich des L-förmigen Teils abstellbar ist und der unter einem Winkel, oftmals etwa 90°, zu diesem Bereich verlaufende Bereich des L-förmigen Teils einen Beitrag zur Positionierung des Abstellelements während der Getränkezubereitung in der Getränkezubereitungsmaschine leistet. Dieser Beitrag kann beispielsweise das Festlegen eines Abstands zu einem anderen Element der Getränkezubereitungsmaschine und/oder eine tragende Funktion sein.

Ein Element ist insbesondere dann L-förmig oder weist einen prägenden L-förmigen Teil auf, wenn das Element in einem Querschnitt im Wesentlichen die Form des Grossbuchstabens L hat oder wenn der Querschnitt des Elements durch einen L-förmigen Teil geprägt wird.

Unabhängig davon, ob eines oder mehrere der zuvor und nachfolgend genannten Merkmale von Ausführungsformen des Abstellelements realisiert sind, kann das Abstellelement eines oder mehrere der folgenden Merkmale aufweisen:
- Das Abstellelement ist einstückig. Das heisst, es lässt sich kein Teil des Ab stell elements in einer nicht-destruktiven Art und Weise vom Abstellelement entfernen.
   In einer Ausführungsform ist das Abstellelement nicht nur einstückig, sondern es weist auch keine beweglichen Teile auf. Das heisst, es lässt sich kein Teil des Abstellelements relativ zu einem anderen Teil des Abstellelements nichtdestruktiv bewegen.
- Das Abstellelement ist aus einem plattenartigen Ausgangskörper gebildet, beispielsweise ausgeschnitten und/oder geformt. Dies schliesst Ausführungsformen mit ein, bei denen nur ein für die Form und Funktion des Abstellelements prägender Teil aus einem plattenartigen Ausgangskörper gebildet ist. Ein Teil des Abstellelements ist insbesondere dann für die Form und Funktion prägend, wenn ein Gefäss zur Aufnahme des zubereiteten Getränkes während der Getränkezubereitung auf einem Bereich des plattenartigen Teils abstellbar ist und ein weiterer plattenartiger Bereich des plattenartigen Teils einen Beitrag zur Positionierung des Abstellelements während der Getränkezubereitung in der Getränkezubereitungsmaschine leistet. Dieser Beitrag kann beispielsweise das Festlegen eines Abstands zu einem anderen Element der Getränkezubereitungsmaschine und/oder eine tragende Funktion sein.
   In einer Ausführungsform ist das Abstellelement derart aus dem plattenartigen Ausgangskörper gebildet, dass das Abstellelement kein Volumen zur Aufnahme eines festen Gegenstandes oder einer Flüssigkeit bildet. In anderen Worten definiert das Abstellelement kein Volumen, in dem ein fester Gegenstand oder eine Flüssigkeit, beispielsweise Flüssigkeit, die aus dem Auslauf der Getränkezubereitungsmaschine tritt, gesammelt werden kann.
   Insbesondere bildet das Abstellelement kein zu den Seiten hin begrenztes Volumen.
   Ein Körper ist insbesondere dann plattenartig, wenn seine Ausdehnung in einer Ebene wesentlich grösser ist als seine Ausdehnung in eine Richtung senkrecht zu dieser Ebene.

Es versteht sich von selbst, dass das Abstellelement unabhängigen von seiner konkreten Realisierung sowohl in der ersten als auch in der zweiten Ausrichtung eine Stabilität aufweist, die ausreichend ist, ein handelsübliches, mit dem zubereiteten Getränk befülltes Gefäss zu tragen.

Wie bereits erwähnt, ist sowohl die Beschaffenheit des Abstellelements als auch dessen Anordnung in der Getränkezubereitungsmaschine sowohl in der ersten Ausrichtung als auch in der zweiten Ausrichtung derart, dass ein Gefäss zur Aufnahme des durch die Getränkezubereitungsmaschine zubereiteten Getränks während der Getränkezubereitung auf dem Abstellelement abstellbar ist, wobei das Abstellelement in erster Ausrichtung die Position eines ersten Gefässes und das Abstellelement in zweiter Ausrichtung die Position eines zweiten Gefässes optimiert.

Mit Blick auf die Anordnung des Abstellelements in der Getränkezubereitungsmaschine und unabhängig von der konkreten Beschaffenheit des Abstellelements kann sich die erste Ausrichtung von der zweiten Ausrichtung insbesondere dadurch unterscheidet, dass das Abstellelement um eine horizontale Achse gedreht angeordnet ist.

Falls beispielsweise das Abstellelement als L-förmiges Element realisiert ist, kann die erste Ausrichtung einem L in gebrauchsüblicher Ausrichtung, das heisst mit einem vertikalen Teil und einem am unteren Ende des vertikalen Teils angreifenden, horizontalen Teil, entsprechen, während die zweite Ausrichtung einem auf dem Kopf stehenden, das heisst um 180° um eine horizontale Achse gedrehten, L entspricht.

Unabhängig von der genauen Beschaffenheit des Abstellelements kann das Abstellelement ergänzend oder alternativ sowohl in der ersten als auch in der zweiten Ausrichtung lose und offenliegend in der Getränkezubereitungsmaschine angeordnet sein.

Das Abstellelement ist insbesondere dann lose in der Getränkezubereitungsmaschine angeordnet, wenn es von einem Benutzer durch eine einfache lineare Bewegung, insbesondere eine einfache lineare Bewegung nach oben hin, ohne Manipulationen an der Getränkezubereitungsmaschine oder Teilen davon und ohne Ausrastbewegung oder dergleichen vollständig von der Getränkezubereitungsmaschine entfernt werden kann. Etwas überspitzt kann man auch sagen, dass das Abstellelement dann lose in der Getränkezubereitungsmaschine angeordnet ist, wenn es aus derselben rausfällt, sobald die Getränkezubereitungsmaschine nach vorne oder zur Seite hin etwas gekippt wird.

Das Abstellelement ist insbesondere dann offenliegend, wenn es nicht in das Gehäuse der Getränkezubereitungsmaschine eingeführt ist.

In der Getränkezubereitungsmaschine können Mittel vorgesehen sein, die ein ungewolltes Verschieben des Abstellelements in der betriebsbereiten Getränkezubereitungsmaschine verhindern. Die Mittel können derart sein, dass ein ungewolltes Verschieben des Abstellelements nur in dessen ersten oder zweiten Ausrichtung verhindert wird. Die Mittel können aber auch derart sein, dass ein ungewolltes Verschieben des Abstellelements sowohl in dessen ersten als auch in dessen zweiten Ausrichtung verhindert wird.

In der Regel, das heisst unabhängig von der konkreten Realisierung der Getränkezubereitungsmaschine und des Abstellelements, ist das Abstellelement sowohl in der ersten als auch in der zweiten Anordnung in einem Bereich zwischen dem Auslauf und einer Tropfschale der Getränkezubereitungsmaschine angeordnet.

In einer Ausführungsform weist das Abstellelement einen oder mehrere Haltebereiche auf, die derart in eine Struktur der Tropfschale eingreifen können, dass eine Bewegung des Abstellelements entlang einer horizontalen Richtung und/oder eine Drehung des Abstellelements um eine horizontale Achse verhindert wird.

Der oder die Haltebereiche greifen insbesondere entlang einer vertikalen Richtung in die Struktur der Tropfschale ein.

Der oder die Haltebereiche und die Struktur, in welche dieser oder diese eingreifen, können insbesondere einen Formschluss in horizontale Richtung bilden.

Das Ab stell element kann einen ersten Haltebereich für die erste Ausrichtung und einen zweiten Haltebereich für die zweite Ausrichtung aufweisen. Dies gilt insbesondere dann, wenn sich die erste Ausrichtung von der zweiten Ausrichtung dadurch unterscheidet, dass das Abstellelement um eine horizontale gedreht angeordnet ist.

Wie erwähnt, dient das Abstellelement dazu, über seine Beschaffenheit und Ausrichtung in der Getränkezubereitungsmaschine die Position von unterschiedlichen Gefässen zur Aufnahme des zubereiteten Getränks während des Zubereitungsprozesses zu optimieren. Dies geschieht in erster Linie dadurch, dass das Abstellelement je nach Ausrichtung einen unterschiedlichen Abstand zwischen Auslauf und der Fläche des Abstellelements, auf ein Gefäss abstellbar ist, definiert.

In einer Ausführungsform begrenzt das Abstellelement sowohl in der ersten Ausrichtung als auch in der zweiten Ausrichtung den Aufnahmebereich in die dem Auslauf gegenüberliegende Richtung. In anderen Worten begrenzt das Abstellelement sowohl in der ersten als auch in der zweiten Ausrichtung den Aufnahmebereich gegen unten hin. Dabei definiert das Abstellelement eine erste Ausdehnung des Aufnahmebereichs in die dem Auslauf gegenüberliegende Richtung (das heisst in der Regel gegen unten hin), wenn das Abstellelement in der ersten Ausrichtung angeordnet ist, und eine zweite Ausdehnung des Aufnahmebereichs in die dem Auslauf gegenüberliegende Richtung (das heisst in der Regel gegen unten hin), wenn das Abstellelement in der zweiten Ausrichtung angeordnet ist, wobei die erste Ausdehnung von der zweiten Ausdehnung unterscheidet. In anderen Worten hängt die Ausdehnung des Aufnahmebereichs in vertikaler Richtung von der Ausrichtung des Abstellelements ab.

Die Erfindung betrifft auch das Abstellelement selbst, das heisst ein Abstellelement zur Positionierung von Gefässen unterschiedlicher Grösse, insbesondere unterschiedlicher Gefässhöhe, in einer Getränkezubereitungsmaschine zur Aufnahme des zubereiteten Getränkes.

Bei der Getränkezubereitungsmaschine handelt es sich insbesondere um eine der zuvor beschriebenen Getränkezubereitungsmaschinen in irgendeiner der zuvor beschriebenen Ausführungsformen.

Das Abstellelement hat in einer bevorzugten Ausführungsform eine Form, die in einer ersten Ausrichtung eine erste horizontale Fläche aufweist, die zum Abstellen eines Gefässes geeignet ist, und die in einer zweiten Ausrichtung eine zweite horizontale Fläche aufweist, die zum Abstellen eines Gefässes geeignet ist. Dabei ist die zweite Ausrichtung eine im Vergleich zur ersten Ausrichtung um eine horizontale Achse gedrehte Ausrichtung.

Der Drehwinkel um die horizontale Achse um das Abstellelement von der ersten Ausrichtung in die zweite Ausrichtung überzuführen, kann insbesondere 180° betragen.

Das Abstellelement kann eines, mehrere oder alle der zuvor in Zusammenhang mit dem Abstellelement der Getränkezubereitungsmaschine genannten Merkmale aufweisen.

Das Abstellelement kann insbesondere eines oder mehrere der folgenden Merkmale aufweisen:
- Die erste horizontale Fläche kann von der zweiten horizontalen Fläche verschieden.
   Die erste horizontale Fläche und die zweite horizontale Fläche können Flächen desselben Bereichs des Abstellelements sein. In einer Vielzahl von Ausführungsformen sind die erste und zweite horizontale Fläche verschiedene horizontale Flächen, die aber durch denselben Bereich des Abstellelements gebildet werden.
   Bei der ersten horizontalen Fläche und der zweiten horizontalen Fläche kann es sich insbesondere um die zuvor beschriebene horizontale Fläche bei erster Ausrichtung des Abstellelements und die zuvor beschriebene horizontale Fläche bei zweiter Ausrichtung des Abstellelements handeln und das Ab stell element kann in jeder in diesem Zusammenhang zuvor beschriebenen Ausführungsform realisiert sein.
- Das Abstellelement kann aus einem plattenartigen Ausgangskörper gebildet, insbesondere in einer der zuvor beschriebenen Art und Weise gebildet.
   Insbesondere kann das Abstellelement aus dem plattenartigen Ausgangskörper gebildet sein und zusätzlich die zuvor beschriebenen ersten und zweiten Bereiche in einer der beschriebenen Ausführungsformen aufweisen.
   Insbesondere kann das Abstellelement derart aus dem plattenartigen Ausgangskörper gebildet sein, dass es kein Volumen im zuvor beschriebenen Sinne zur Aufnahme eines festen Gegenstandes oder einer Flüssigkeit bildet.
- Das Abstellelement kann als L-förmiges Element in dem zuvor beschriebenen Sinne realisiert sein.
   Wenn das Abstellelement als L-förmiges Element realisiert ist, bilden in der Regel die unter einem Winkel, in der Regel unter etwa 90°, verlaufenden Teile des L-förmigen Elements den zuvor genannten ersten und zweiten Bereich.
- Das Abstellelement kann einstückig, insbesondere in einer der zuvor beschriebenen Art einstücking, sein.
   In einer Ausführungsform ist das aus einem plattenartigen Ausgangskörper gebildete Abstellelement einstückig.
- Das Abstellelement kann, abgesehen von einem optional vorhandenen Haltebereich in einer der zuvor beschriebenen Art, keinerlei Elemente aufweisen, die das Abstellelement mit der Getränkezubereitungsmaschine verbinden oder durch diese führen lassen.
   Das Abstellelement kann für eine lose und offenliegende Anordnung in der Getränkezubereitungsmaschine eingerichtet sein.

Das Abstellelement kann insbesondere aus einem plattenartigen Ausgangskörper gebildet, einstückig und L-förmig sein. Dabei ist "aus einem plattenartigen Ausgangskörper gebildet", "einstückig" und "L-förmig" insbesondere in dem zuvor beschriebenen Sinne zu verstehen.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Figur 1: Eine beispielhafte Ausführungsform der Getränkezubereitungsmaschine mit einem beispielhaften Abstellelement in erster Ausrichtung;
- Figur 2: Eine Explosionsdarstellung der Getränkezubereitungsmaschine gemäss Figur 1; und
- Figur 3: Die Getränkezubereitungsmaschine gemäss Figur 1 mit dem Abstellelement in zweiter Ausrichtung.

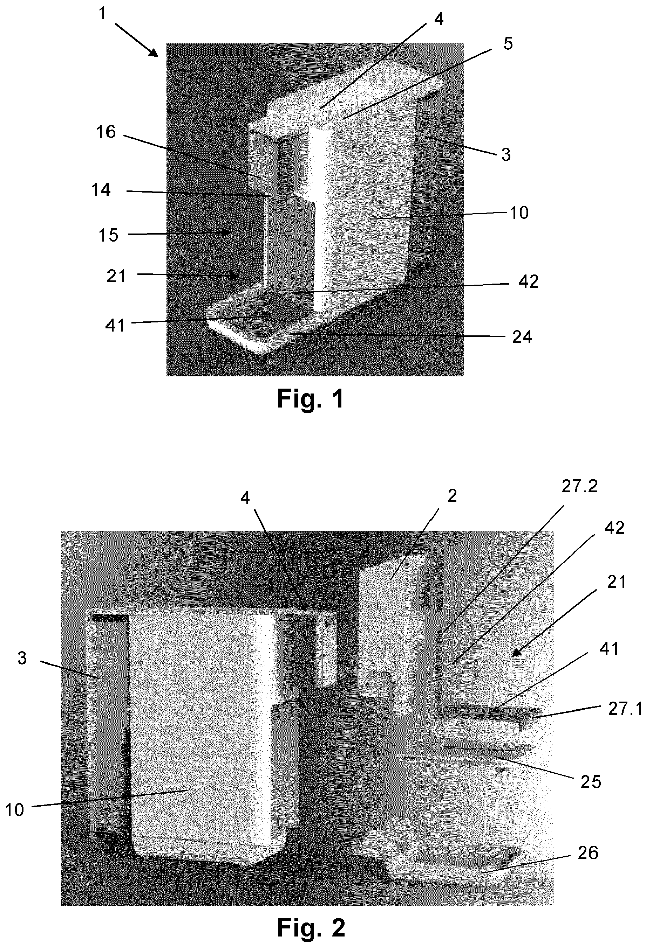

**Figur 1** zeigt eine beispielhafte Ausführungsform einer erfindungsgemässen Getränkezubereitungsmaschine 1, die insbesondere ein erfindungsgemässes Abstellelement 21 in einer beispielhaften Ausführungsform aufweist.

Bei der gezeigten Getränkezubereitungsmaschine 1 handelt es sich um eine Kapselkaffeemaschine, die neben dem Abstellelement 21 folgende Elemente aufweist:
- Ein Bedienhebel 4, der von einer geschlossenen Position in eine offene Position bringbar ist, wobei der Bedienhebel 4 in der geschlossenen Position eine Kapseleinlegeöffnung zum Einbringen einer Kapsel in die Getränkezubereitungsmaschine verschliesst und wobei die Kapseleinlegeöffnung offenliegt, wenn der Bedienhebel 4 die offene Position einnimmt.
- Bedienelemente 5, über welche sich das von der Getränkezubereitungsmaschine 1 zubereitete Getränke individualisieren lässt.
- Ein Wassertank 3, dem Wasser während des Zubereitungsprozesses entzogen wird, um es einer Brühkammer der Getränkezubereitungsmaschine 1 zuzuführen.
- Eine Auslaufhaube 16, die einen Auslauf 14 aufweist, aus welchem das zubereitete Getränk aus der Getränkezubereitungsmaschine 1 tritt.
- Eine Tropfschale 24, die in der gezeigten Ausführungsform ein Aufnahmeelement 26 und ein Deckelement 25 aufweist. Das Deckelement 25 schliesst das Aufnahmeelement 26 gegen oben hin ab.
- Ein Auffangbehälter 2 (nur in Figur 2 sichtbar), in welchen gebrauchte Portionenkapsel ausgeworfen werden.

Das Abstellelement 21 dient dazu, ein von einem Benutzer aus einer Mehrzahl (das heisst mindestens zwei) unterschiedlicher Gefässe gewähltes Gefäss während des Zubereitungsprozesses zur Aufnahme des zubereiteten Getränkes optimal, oder zumindest optimaler im Vergleich zu einem Abstellelement, das zu einem starren Abstand zwischen einem Gefässboden und dem Auslauf 14 führt, relativ zum Auslauf 14 zu positionieren.

Entsprechend definiert das Abstellelement 21 zusammen mit dem Auslauf 14, beziehungsweise der Auslaufhaube 16, einem Aufnahmebereich 15 der Getränkezubereitungsmaschine 1, in welchem ein Gefäss eingebracht und welcher durch das Abstellelement 21, gemäss der vorliegenden Erfindung insbesondere durch die Ausrichtung des Abstellelements 21 innerhalb der Getränkezubereitungsmaschine 1, für ein bestimmtes Gefäss oder eine bestimmte Gefässgruppe optimiert, oder zumindest verbessert, werden kann.

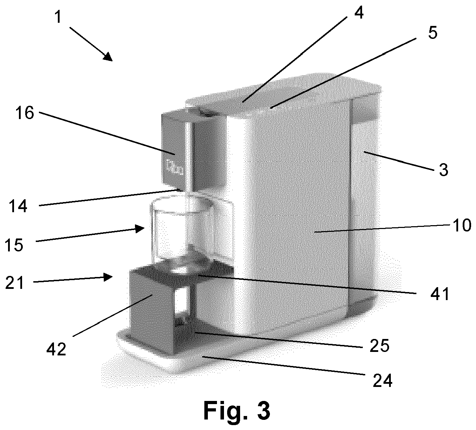

In der in **Figur 1** gezeigten Ausführungsform ist das Abstellelement 21 in einer ersten Ausrichtung in der Getränkezubereitungsmaschine 1 angeordnet, die für ein erstes Gefäss besonders geeignet ist. **Figur 3** zeigt dieselbe Getränkezubereitungsmaschine 1 mit demselben Abstellelement 21, das in einer zweiten Ausrichtung in der Getränkezubereitungsmaschine 1 angeordnet ist, die für ein zweites Gefäss besonders geeignet ist.

Das gezeigte Abstellelement 21 ist ein L-förmiges, einstückig aus einem plattenartigen Ausgangskörper geformtes Abstellelement. Dieses weist folglich in einem betriebsbereiten Zustand der Getränkezubereitungsmaschine einen ersten, horizontal ausgerichtete Bereich 41 und einen zweiten, vertikal ausgerichteten Bereich 42 auf. Der erste Bereich 41 bildet sowohl in der in **Figur 1** gezeigten ersten Ausrichtung als auch in der in **Figur 3** gezeigten zweiten Ausrichtung die Abstellfläche für ein Gefäss.

Die erste Ausrichtung unterscheidet sich von der zweiten Ausrichtung dadurch, dass das Abstellelement 21 in der zweiten Ausrichtung im Vergleich zur ersten Ausrichtung auf dem Kopf steht, das heisst um 180° um eine horizontale, parallel zur Front der Getränkezubereitungsmaschine 1 verlaufende Achse gedreht wurde, wobei der nach wie vor vertikal ausgerichtete zweite Bereich 42 als Stütze für den nun gegen den Auslauf 14 hin verschobenen, nach wie vor horizontal ausgerichteten ersten Bereich 41 dient.

Als Front der Kaffeemaschine wird diejenige vertikal verlaufende Seite der Getränkezubereitungsmaschine 1 bezeichnet, die im Betrieb dem Benutzer zugewandt ist und aus der beispielsweise die Auslaufhabe 16 und die Tropfschale 24 herausragen.

Abgesehen vom Abstellelement 21, sind alle zuvor genannten Elemente der Getränkezubereitungsmaschine 1 vollständig oder teilweise innerhalb einer Grundeinheit 10 (Gehäuse, Grundkörper) der Getränkezubereitungsmaschine 1 angeordnet, beispielsweise weil sie zum Innenleben der Getränkezubereitungsmaschine 1 gehören (beispielsweise Brühkammer) und deshalb innerhalb der Grundeinheit 10 angeordnet sind, weil sie vorteilhaft nicht über die Grundeinheit 10 herausstehend sind und deshalb vollständig innerhalb oder zumindest bündig mit der Grundeinheit angeordnet sind (beispielsweise Wassertank 3 oder Auffangbehälter 2), oder weil sie eine bestimmte Position relativ zum Grundkörper 10 einnehmen müssen und deshalb teilweise innerhalb der Grundeinheit 10 angeordnet, beispielsweise eingeschoben, sind (beispielsweise Tropfschale 24).

Im Gegensatz zu den genannten Elementen der Getränkezubereitungsmaschine 1 ist das Abstellelement 21 in betriebsbereitem Zustand der gezeigten Getränkezubereitungsmaschine 1 und unabhängig davon, ob das Abstellelement 21 in der ersten, für das erste Gefäss besonders geeignete Ausrichtung **(****Figur 1****)** oder in der zweiten, für das zweite Gefäss besonders geeignete Ausrichtung **(****Figur 3****)** angeordnet ist, offenliegend und lose aufliegend in, oder besser gesagt an, der Getränkezubereitungsmaschine 1 angeordnet.

**Figur 2** zeigt die Getränkezubereitungsmaschine gemäss Figur 1 in einer Explosionsdarstellung. Darin ist das L-förmige, aus einem plattenartigen Ausgangskörper einstückig gebildete Abstellelement 21 gemäss der gezeigten, beispielhaften Ausführungsform besonders gut erkennbar.

Ferner ist in Figur 2 ein erster Haltebereich 27.1 und ein zweiter Haltebereich 27.2 des Abstellelements 21 sichtbar. Diese sind als Abweichungen des Abstellelements 21 von der L-Form realisiert und derart dimensioniert, dass sie in eine entsprechende Öffnung in der Tropfschale 24 eingreifen können. Dadurch kann in beiden Ausrichtungen des Abstellelements 21 ein wegrutschen des ansonsten lose und offen an der Getränkezubereitungsmaschine 1 anliegenden Abstellelements 21 bei Belastung durch ein gefülltes Gefäss verhindert werden.

Wie erwähnt, zeigt **Figur 3** die Getränkezubereitungsmaschine 1 gemäss Figur 1, bei welcher das Abstellelement 21 in der zweiten Ausrichtung angeordnet ist. Es wird auf die in Zusammenhang mit Figur 1 gemachten Ausführungen verwiesen.

## Patentansprüche

1. Getränkezubereitungsmaschine (1), aufweisend
- einen Auslauf (14) zur Abgabe eines zubereiteten Getränkes,
- einen Aufnahmebereich (15) zur Aufnahme eines Gefässes zur Aufnahme des zubereiteten Getränkes,
- ein Abstellelement (21),
wobei das Abstellelement (21) relativ zum Auslauf (14) in einer ersten Ausrichtung und einer von der ersten Ausrichtung verschiedenen zweiten Ausrichtung angeordnet werden kann, **dadurch gekennzeichnet, dass** sowohl in der ersten Ausrichtung als auch in der zweiten Ausrichtung ein Gefäss zur Aufnahme des zubereiteten Getränkes während der Getränkezubereitung auf dem Abstellelement (21) abstellbar ist.

2. Getränkezubereitungsmaschine (1) nach Anspruch 1, wobei das Abstellelement (21) sowohl in der ersten Ausrichtung als auch in der zweiten Ausrichtung eine horizontal angeordnete Fläche aufweist, auf der ein Gefäss zur Aufnahme des zubereiteten Getränkes während der Getränkezubereitung abstellbar ist, wobei die horizontal angeordnete Fläche bei erster Ausrichtung des Abstellelements (21) und die horizontal angeordnete Fläche bei zweiter Ausrichtung des Abstellelements (21) eine Fläche oder Flächen desselben Bereichs (41) des Abstellelements (21) sind.

3. Getränkezubereitungsmaschine (1) nach Anspruch 2, wobei das Abstellelement (21) einen ersten Bereich (41) und einen zweiten Bereich (42) aufweist, wobei der erste Bereich (41) sowohl in der ersten als auch in der zweiten Ausrichtung horizontal angeordnet ist, wobei ein Gefäss zur Aufnahme des zubereiteten Getränkes während der Getränkezubereitung sowohl in der ersten als auch in der zweiten Ausrichtung auf dem ersten Bereich (41) abstellbar ist und wobei der zweite Bereich (42) sowohl in der ersten als auch in der zweiten Ausrichtung unter einem Winkel zum ersten Bereich (41) verläuft.

4. Getränkezubereitungsmaschine (1) nach Anspruch 3, wobei der Winkel 90° ist.

5. Getränkezubereitungsmaschine (1) nach einem der Ansprüche 1-4, wobei das Abstellelement (21) als L-förmiges Element realisiert ist.

6. Getränkezubereitungsmaschine (1) nach einem der Ansprüche 1-5, wobei sich die erste Ausrichtung von der zweiten Ausrichtung dadurch unterscheidet, dass das Abstellelement (21) um eine horizontale Achse gedreht angeordnet ist.

7. Getränkezubereitungsmaschine (1) nach einem der Ansprüche 1-6, wobei das Abstellelement (21) sowohl in der ersten als auch in der zweiten Ausrichtung lose und offenliegend in der Getränkezubereitungsmaschine (1) angeordnet ist.

8. Getränkezubereitungsmaschine (1) nach einem der Ansprüche 1-7, wobei das Ab stell element (21) sowohl in der ersten als auch in der zweiten Anordnung in einem Bereich zwischen dem Auslauf (14) und einer Tropfschale (24) angeordnet ist, wobei ein Haltebereich (27.1, 27.2) des Abstellelements (21) derart in eine Struktur der Tropfschale (24) eingreift, dass eine Bewegung des Abstellelements (21) entlang einer horizontalen Richtung und/oder eine Drehung des Abstellelements (21) um eine horizontale Achse verhindert wird.

9. Getränkezubereitungsmaschine (1) nach einem der Ansprüche 1-8, wobei das Abstellelement (21) ein einstückiges Element ist.

10. Getränkezubereitungsmaschine (1) nach einem der Ansprüche 1-9, wobei das Abstellelement (21) aus einem plattenartigen Ausgangskörper gebildet ist.

11. Getränkezubereitungsmaschine (1) nach Anspruch 10, wobei das Abstellelement (21) derart aus dem plattenartigen Ausgangskörper gebildet ist, dass das Abstellelement (21) kein Volumen zur Aufnahme eines festen Gegenstandes oder einer Flüssigkeit bildet.

12. Getränkezubereitungsmaschine (1) nach einem der Ansprüche 1-11, wobei das Abstellelement (21) sowohl in der ersten Ausrichtung als auch in der zweiten Ausrichtung den Aufnahmebereich (15) in die dem Auslauf (14) gegenüberliegende Richtung begrenzt, wobei das Abstellelement (21) eine erste Ausdehnung des Aufnahmebereichs (15) in die dem Auslauf (14) gegenüberliegende Richtung definiert, wenn das Abstellelement (21) in der ersten Ausrichtung angeordnet ist, wobei das Abstellelement (21) eine zweiten Ausdehnung des Aufnahmebereichs (15) in die dem Auslauf (14) gegenüberliegende Richtung definiert, wenn das Abstellelement (21) in der zweiten Ausrichtung angeordnet ist, und wobei sich die erste Ausdehnung von der zweiten Ausdehnung unterscheidet.

13. Abstellelement (21) zur Positionierung von Gefässen unterschiedlicher Grösse in einer Getränkezubereitungsmaschine (1) zur Aufnahme des zubereiteten Getränkes, wobei das Abstellelement (21) in einer ersten Ausrichtung eine erste horizontale Fläche zum Abstellen eines Gefässes aufweist und in einer zweiten Ausrichtung eine zweite horizontale Fläche zum Abstellen eines Gefässes aufweist, wobei die zweite Ausrichtung eine im Vergleich zur ersten Ausrichtung um eine horizontale Achse gedrehte Ausrichtung ist.

14. Abstellelement (21) nach Anspruch 13, wobei das Abstellelement (21) als L-förmiges Element realisiert ist.

15. Abstellelement (21) nach einem der Ansprüche 13 oder 14, wobei das Ab stell element (21) einstückig ist.
